# EUROPEAN PATENT APPLICATION

(11) **EP 4 539 261 A1**
(43) Date of publication of application: **16.04.2025**
(21) Application number: 24202124.4
(22) Date of filing: 24.09.2024
(51) Int. Cl.: H01R 13/58

(54) **ROTATABLE CONDUCTOR CONDUIT ASSEMBLY FOR DRESS COVER**

(30) Priority: 10.10.2023 US 202363543361 P; 18.09.2024 US 202418888546
(71) Applicant: Aptiv Technologies AG, 8200 Schaffhausen (CH)
(72) Inventor: KOPELOS, Justin, 8200 Schaffhausen (CH); FARRELL, Jack, 8200 Schaffhausen (CH); VERNON, Daniel, 8200 Schaffhausen (CH)
(74) Representative: Bardehle Pagenberg Partnerschaft mbB Patentanwälte Rechtsanwälte

(57) **Abstract**

A dress cover (100) designed to house and guide an elongate conductor is disclosed herein. The dress cover (100) includes a flange (202) for connection to a connector and a conductor conduit (204) that is rotatably affixed to the flange (202). The conductor conduit (204) can be secured in various radial orientations with respect to the flange (202), providing flexibility in directing the conductor within the dress cover (100). This innovative design allows for efficient containment and guidance of the conductor, enhancing the functionality and versatility of the dress cover (100) in various applications.

## Description

This disclosure is directed to a dress cover for a connector of an elongate conductor, particularly to a dress cover that is rotatable to several different orientations.

Dress covers are used with electrical connectors to route elongate conductors, such as high speed coaxial data transmission cables, exiting the electrical connectors in a directed direction and to provide an appropriate bend radius for the conductors. A proper bend radius is especially important for data transmission cables. Existing dress covers are manufactured with a fixed orientation to the connectors to which they are attached. This requires a dedicated tool to manufacture each of the dress cover orientations.

Previous approaches for containing and directing elongate conductors have typically involved fixed conduits or channels that are permanently attached to a connector or flange. These fixed conduits limit the flexibility and adjustability of the conductor's orientation, making it challenging to accommodate various installation configurations and requirements. Additionally, fixed conduits may not provide optimal positioning for the conductor, leading to potential inefficiencies or difficulties during installation and use.

Some existing solutions have attempted to address the limitations of fixed conduits by incorporating swivel mechanisms or adjustable joints to allow for limited rotational movement of the conduit relative to the connector. While these designs offer some degree of flexibility in positioning the conductor, they often lack the ability to securely lock the conduit in place once the desired orientation is achieved. This can result in unintended movement or misalignment of the conductor during operation, potentially leading to performance issues or safety concerns.

Other conventional approaches have focused on utilizing separate components or accessories to redirect or guide elongate conductors, such as clips, clamps, or brackets. However, these solutions can be cumbersome, complex, and may require additional assembly steps, increasing the overall complexity and cost of the system. Moreover, these add-on components may not provide a seamless integration with the connector or flange, leading to potential compatibility issues or inefficiencies in the overall assembly process. None of these approaches have provided a comprehensive solution that combines the features described in this disclosure.

In some aspects, the techniques described herein relate to a dress cover configured to contain and direct an elongate conductor, including a flange configured to be attached to a connector and a conductor conduit configured to be rotatably attached to the flange and configured to be secured in one of a plurality of radial orientations relative to the flange.
**FIG. 1** is an isometric view of a rotatable dress cover attached to an electrical connector according to some embodiments.
**FIG. 2** is an exploded view of the rotatable dress cover of **FIG. 1** rotated to a different orientation according to some embodiments.
**FIG. 3** is an isometric view of the rotatable dress cover of **FIG. 1** rotated to a different orientation relative to the electrical connector according to some embodiments.
**FIG. 4** is an isometric view of a flange of the rotatable dress cover of **FIG. 1** according to some embodiments.
**FIG. 5** is a top view of the flange of FIG. 4 in an unassembled condition according to some embodiments.
**FIG. 6** is an isometric view of a conductor conduit of the rotatable dress cover of **FIG. 1** according to some embodiments.
**FIG. 7** is a top view of the conductor conduit of **FIG. 6** in an unassembled condition according to some embodiments.
**FIGs. 8A-8D** are end views of the rotatable dress cover of **FIG. 1** rotated to four different orthogonal orientations according to some embodiments.
**FIG. 8E** is an end view of the flange of **FIG. 4** used as a standalone dress cover according to some embodiments.

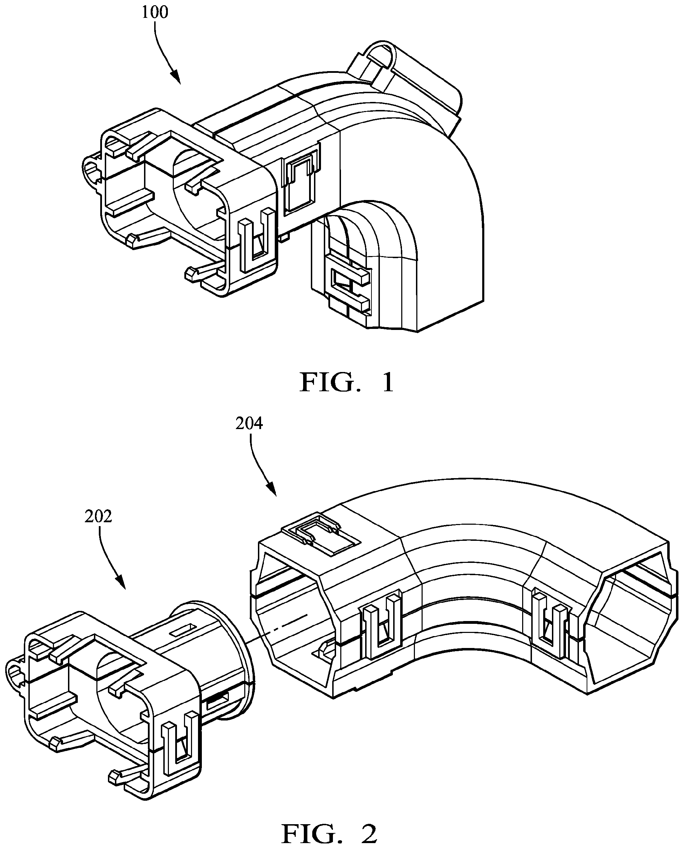

A non-limiting example of a rotatable dress cover 100 that can have different radial orientations is illustrated in **FIG. 1****.** High speed coaxial data transmission cables require a proper bend radius to maintain their designed transmission characteristics. The illustrated rotatable dress cover 100 may be used to provide the proper bend radius, volume, and exit orientation for a plurality of data transmission cables exiting an electrical connector.

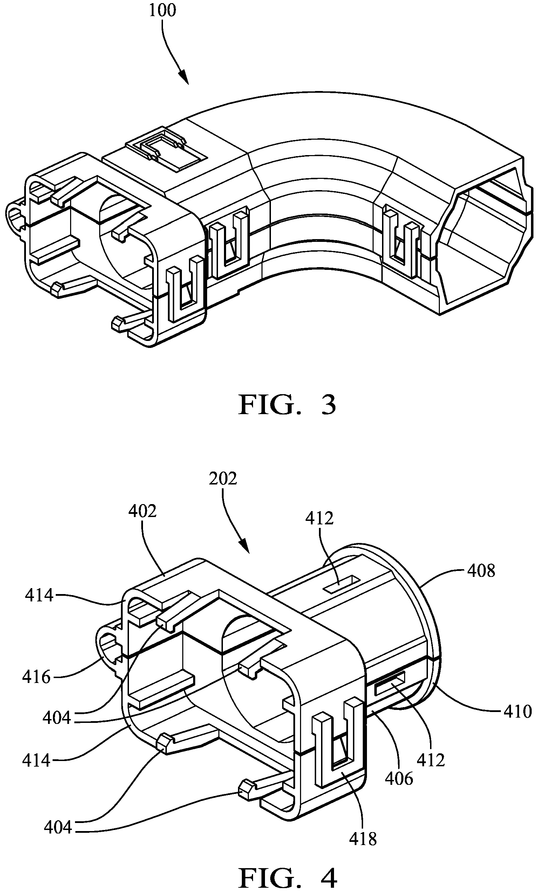

As shown in the exploded view of **FIG. 2**, the dress cover 100 includes a flange 202 that is configured to be attached to an electrical connector (not shown) and an angled conductor conduit, hereafter referred to as the conduit 204, that is rotatably attached to the flange 202. **FIG. 1** shows the conduit 204 in a 6 o'clock orientation relative to the flange 202, while **FIG. 3** shows the conduit 204 in a 3 o'clock orientation relative to the flange 202.

As illustrated in **FIG.4****,** the flange 202 has a base 402 that is configured to be secured to the electrical connector by a plurality of attaching features 404, e.g., latched locking arms, that engage a housing of the electrical connector. The flange 202 also includes a hollow cylindrical collar 406 which is configured to contain the data transmission cables as they exit the electrical connector. A free end 408 of the collar 406 has a circumferential ridge 410 that engages with retaining features in the conduit 204 to rotatably retain the conduit 204 to the flange 202. The collar 406 also defines a plurality of slots 412 that are configured to engage with alignment features of the conduit 204 to align the conduit 204 in the desired orientation relative to the flange 202. The slots 412 shown here are rectangular slots having a rounded bottom surface arranged around the collar 406 and spaced at substantially 90 degree intervals around the collar 406. As used herein, the term "substantially 90 degrees" means 90 degrees ± 15 degrees. Alternative embodiments of the flange may be envisioned wherein the slots have different slot and/or different spacing between the slots. For example, the alternative slots may be rectangular apertures extending through the collar 406.

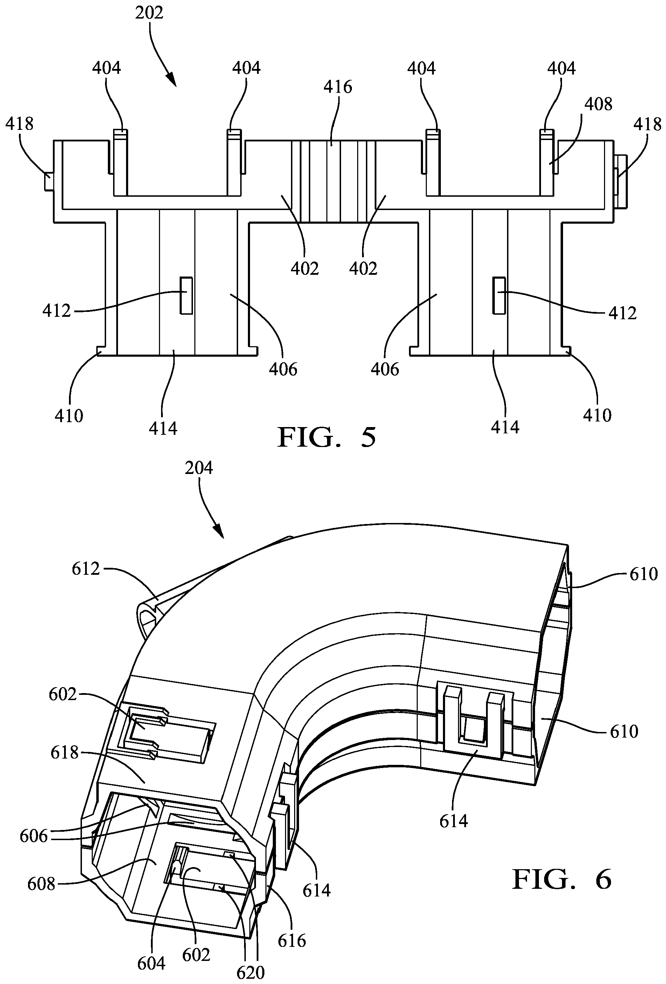

As shown in **FIGs. 4** **and** **5**, the flange 202 has two halves 414 that are joined by a living hinge 416. The flange 202 also has corresponding locking features 418 on each half 414 that are configured to secure the flange 202 around the data transmission cables. The flange 202 is divided into two halves 414, thereby allowing the flange 202 to be placed over the data transmission cables and attached to the electrical connector after the data transmission cables are secured within the electrical connector. In alternative embodiments, the collar may be of a unitary design.

As illustrated in **FIG. 6****,** the alignment features of the conduit 204 include a pair of locking arms 602 that are arranged substantially opposite one another, e.g., radially offset by 180 degrees ± 10 degrees. The locking arms 602 have latches 604 on one end that engage the slots 412 in the collar 406. In this example, the locking arms 602 are attached to the conduit 204 by a pair of flex beams 620 that allow the latches 604 to disengage the slots 412 by pressing on the end of the locking arms 602 opposite the latch 604. In alternative embodiments of the conduit, the locking arms may be cantilevered.

The retention features of the conduit 204 are a plurality of grooves 606 in an inner surface 608 of the conduit 204 in which the ridge 410 of the collar 406 is received in a "tongue-and-groove" arrangement, thereby rotatably securing the conduit 204 to the flange 202.

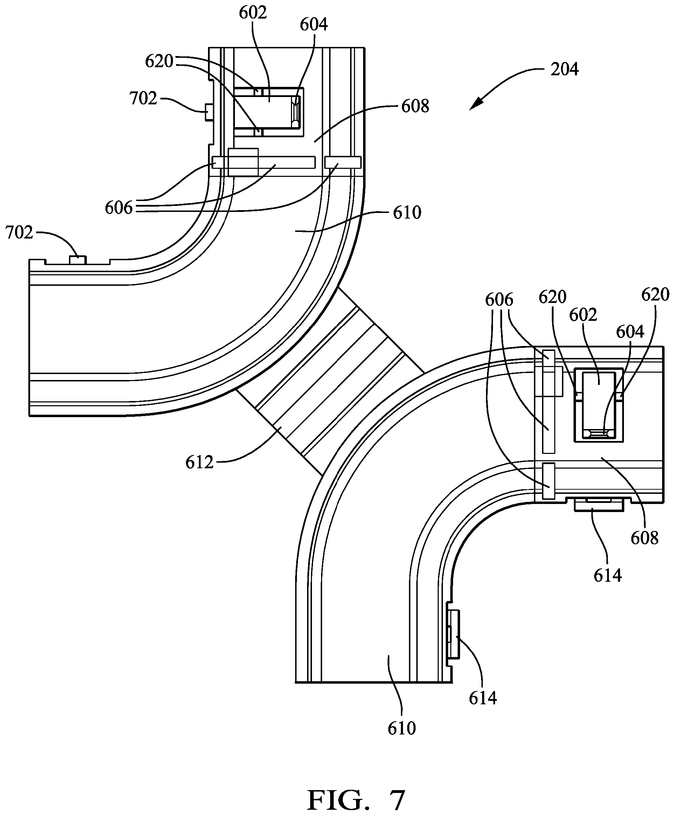

As shown in **FIGs. 6** **and** **7****,** the conduit 204 has two halves 610 that are joined by a living hinge 612. The conduit 204 also has corresponding locking features 614 on each of the two halves 610 that are configured to secure the conduit 204 around the data transmission cables and to the flange 202. The conduit 204 being divided into two halves 610 allows the conduit 204 to be placed over the data transmission cables and attached to the flange 202 after the data transmission cables are secured within the electrical connector. In alternative embodiments, the two halves 610 may be separate and secured to one another by the locking features 614 or by other means.

The conduit 204 has a generally octagonal cross section that provides four flat sides 616, 618 with pairs of the four flat sides 616, 618 arranged opposite one another. The four flat sides 616, 618 allow easier and better alignment for the cantilevered arms 602 with the slots 412 in the collar 406 and allow easier and better alignment for the corresponding locking features 614.

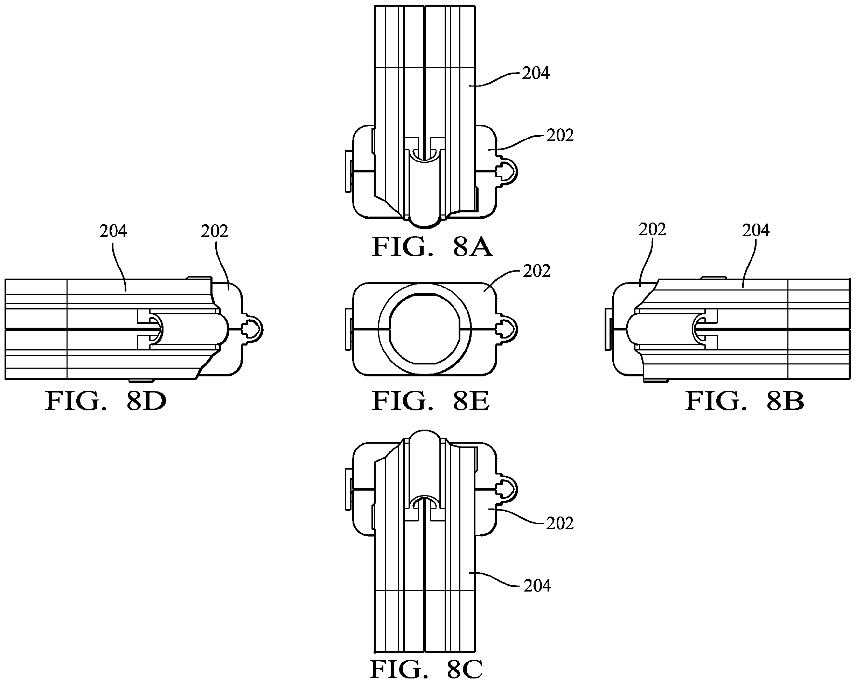

The conduit 204 may be oriented in a 12 o'clock position as shown in **FIG. 8A****,** a **3** o'clock position as shown in **FIG. 8B****,** a 6 o'clock position as shown in **FIG. 8C****,** or a 9 o'clock position as shown in **FIG. 8D****.** As shown in **FIG. 8E****,** the flange 202 may be used separately to provide a dress cover with a shorter straight conduit.

The rotatability of the conduit 204 relative to the flange 202 of the dress cover 100 provides the benefit of allowing assembly operators to reposition the flange during assembly operations to aid installation and proper cable routing. The rotatable dress cover 100 presented herein allows two components (flange 202, conduit 204) to replace up to five separate fixed dress cover components.

While the conduit 204 of the dress cover 100 presented herein is bent to a right-angled shape, other embodiments of the conduit may be envisioned in which the conduit is bent to any angle between 0 and 180 degrees.

While the conduit 204 of the dress cover 100 presented herein is configured to be arranged at one of several predetermined orientations relative to the flange 202, other embodiment of the dress cover may be envisioned in which the conduit may be arranged in any orientation relative to the flange and is not fixed in any particular orientation.

While the examples presented herein are directed to a dress cover for an electrical connector, alternative embodiments of the dress cover may be envisioned that are configured for fiber optic cables, pneumatic conduits, hydraulic conduits, or a combination of any of these types of conductors.

### Discussion of Possible Embodiments

In some aspects, the techniques described herein relate to a dress cover configured to contain and direct an elongate conductor, including: a flange configured to be attached to a connector; and a conductor conduit configured to be rotatably attached to the flange and configured to be secured in one of a plurality of radial orientations relative to the flange.

The dress cover of the preceding paragraph can optionally include, additionally and/or alternatively any, one or more of the following features/steps, configurations and/or additional components.

In some aspects, the techniques described herein relate to a dress cover, wherein the conductor conduit and the flange include locking features configured to secure the conductor conduit in the one of the plurality of radial orientations relative to the flange.

In some aspects, the techniques described herein relate to a dress cover, wherein the flange defines a cylindrical collar, and the conductor conduit defines a collar opening configured to receive the collar.

In some aspects, the techniques described herein relate to a dress cover, wherein a free end of the collar defines a circumferential ridge that is received in a plurality of grooves in an inner surface of the conductor conduit.

In some aspects, the techniques described herein relate to a dress cover, wherein the locking features include a flexible locking arm extending from the connector conduit, the flexible locking arm defining a latch on its free end and wherein the locking features further include an aperture defined by the collar and configured to receive the latch.

In some aspects, the techniques described herein relate to a dress cover, wherein the conductor conduit includes a curved section configured to arrange an exit opening of the conductor conduit in a non-parallel orientation to the collar opening.

In some aspects, the techniques described herein relate to a dress cover, wherein the collar opening has a first pair of surfaces arranged substantially parallel to one another and a second pair of surfaces arranged substantially parallel, the first pair of surfaces being arranged perpendicular to the second pair of surfaces.

In some aspects, the techniques described herein relate to a dress cover, wherein the collar opening has curved surfaces between each of the first pair of surfaces and the second pair of surfaces.

In some aspects, the techniques described herein relate to a dress cover, wherein one of the first pair of surfaces defines the flexible locking arm.

In some aspects, the techniques described herein relate to a dress cover, wherein the collar defines a plurality of the aperture arranged around the collar and spaced to provide one of the plurality of radial orientations of the conductor conduit relative to the flange.

In some aspects, the techniques described herein relate to a dress cover, wherein the collar defines four apertures in the plurality of the aperture spaced at 90 degrees from one another.

In some aspects, the techniques described herein relate to a dress cover, wherein the conductor conduit defines a plurality of the locking arm arranged around the conductor conduit and spaced to provide one of the plurality of radial orientations of the conductor conduit relative to the flange.

In some aspects, the techniques described herein relate to a dress cover, wherein the conductor conduit defines a pair of the locking arm, the latches on the pair of the locking arm being spaced at 180 degrees from one another.

In some aspects, the techniques described herein relate to a dress cover, wherein the conductor conduit includes two conduit halves, the two conduit halves being joined by a hinge.

In some aspects, the techniques described herein relate to a dress cover, wherein the hinge includes a living hinge integrally formed with the two conduit halves.

In some aspects, the techniques described herein relate to a dress cover, wherein the two conduit halves are further joined by a locking loop extending from one of the two conduit halves engaging a locking tab on the other of the two conduit halves, the hinge arranged between the locking loop and the locking tab.

In some aspects, the techniques described herein relate to a dress cover, wherein the two conduit halves includes a plurality of the hinge, a plurality of the locking loop, and a plurality of the locking tab.

In some aspects, the techniques described herein relate to a dress cover, wherein the flange includes two flange halves, the two flange halves being joined by a hinge.

In some aspects, the techniques described herein relate to a dress cover, wherein the hinge includes a living hinge integrally formed with the two flange halves.

In some aspects, the techniques described herein relate to a dress cover, wherein the two flange halves are further joined by a locking loop extending from one of the two flange halves engaging a locking tab on the other of the two flange halves, the hinge arranged between the locking loop and the locking tab.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. A dress cover (100) configured to contain and direct an elongate conductor, comprising:
a flange (202) configured to be attached to a connector; and
a conductor conduit (204) configured to be rotatably attached to the flange (202) and configured to be secured in one of a plurality of radial orientations relative to the flange (202).

2. The dress cover (100) in accordance with claim 1, wherein the conductor conduit (204) and the flange (202) comprise locking features (404) configured to secure the conductor conduit (204) in the one of the plurality of radial orientations relative to the flange (202).

3. The dress cover (100) in accordance with claim 2, wherein the flange (202) defines a cylindrical collar (406), and the conductor conduit (204) defines a collar opening configured to receive the collar (406).

4. The dress cover (100) in accordance with claim 3, wherein a free end (408) of the collar (406) defines a circumferential ridge (410) that is received in a plurality of grooves (606) in an inner surface (608) of the conductor conduit (204).

5. The dress cover (100) in accordance with claim 4, wherein the locking features (404) comprise a flexible locking arm (602) extending from the connector conduit (204), the flexible locking arm (620) defining a latch (604) on its free end (408) and wherein the locking features (404) further comprise an aperture (412) defined by the collar (406) and configured to receive the latch (604).

6. The dress cover (100) in accordance with claim 5, wherein the collar opening has a first pair of surfaces (618) arranged substantially parallel to one another and a second pair of surfaces (616) arranged substantially parallel, the first pair of surfaces (618) being arranged perpendicular to the second pair of surfaces (616).

7. The dress cover (100) in accordance with claim 6, wherein the collar opening has curved surfaces between each of the first pair of surfaces (618) and the second pair of surfaces (616).

8. The dress cover (100) in accordance with claim 6 or 7, wherein one of the first pair of surfaces (618) defines the flexible locking arm (602).

9. The dress cover (100) in accordance with any one of claims 5 to 8, wherein the collar (406) defines a plurality of the aperture (412) arranged around the collar (406) and spaced to provide one of the plurality of radial orientations of the conductor conduit (204) relative to the flange (202).

10. The dress cover (100) in accordance with claim 9, wherein the collar (406) defines four apertures in the plurality of the aperture (412) spaced at 90 degrees from one another.

11. The dress cover (100) in accordance with claim 9 or 10, wherein the conductor conduit (204) defines a plurality of the locking arm (602) arranged around the conductor conduit (204) and spaced to provide one of the plurality of radial orientations of the conductor conduit (204) relative to the flange (202).

12. The dress cover (100) in accordance with claim 11, wherein the conductor conduit (204) defines a pair of the locking arm (602), the latches (604) on the pair of the locking arm (602) being spaced at 180 degrees from one another.

13. The dress cover (100) in accordance with any one of claims 4 to 12, wherein the conductor conduit (204) comprises a curved section configured to arrange an exit opening of the conductor conduit (204) in a non-parallel orientation to the collar opening.

14. The dress cover (100) in accordance with any one of the preceding claims, wherein the conductor conduit (204) comprises two conduit (204) halves, the two conduit halves (610) being joined by a hinge (612).

15. The dress cover (100) in accordance with claim 14, wherein the hinge (612) comprises a living hinge integrally formed with the two conduit halves (610).
